# EUROPEAN PATENT APPLICATION

(11) **EP 4 682 732 A1**
(43) Date of publication of application: **21.01.2026**
(21) Application number: 24189001.1
(22) Date of filing: 16.07.2024
(51) Int. Cl.: G06F 16/14

(54) **COMPUTER-IMPLEMENTED METHOD FOR PERFORMING QUERIES ON PROPERTIES OF DATA ITEMS IN A DATA STORAGE INFRASTRUCTURE**

(71) Applicant: Datadobi bv, 3012 Wilsele (BE)
(72) Inventor: Van Eeckhoudt, Pepijn, 3010 Kessel-Lo (BE); Marivoet, Kim, 3360 Lovenjoel (BE)
(74) Representative: Ipsilon Belgium

(57) **Abstract**

Example embodiments disclose a method for performing queries on properties of data items stored in a data storage infrastructure (1) comprising data storage systems; wherein the data items have associated metadata and are identifiable by attributes characterizing a logical and physical location of the data items within the data storage infrastructure; the method comprises: i) performing (501) scans on the data storage systems for the associated metadata and attributes (511); ii) mapping (502) the data storage infrastructure to a rooted tree; wherein the date items are represented as leaf nodes thereby defining respective hierarchical paths along one or more internal nodes to the root node; and wherein the internal nodes are defined according to a predefined hierarchical ruleset; iii) ordering (503) the nodes according to a depth-first ordering rule in an ordered list; iv) adding references to sibling nodes of the respective nodes; v) adding (504), aggregated metadata to internal nodes based on metadata or aggregated metadata of descendant child nodes; vi) providing user definable hierarchical querying based on the aggregated metadata; vii) perform a query by traversing through the nodes in the ordered list, and thereby evaluating aggregated metadata of an internal node according to the query, and based on the evaluation, proceed to evaluating the next node in the ordered list or proceed to the sibling node.

## Description

### Technical Field

Various example embodiments relate to a computer-implemented method for performing queries on properties of data items stored in a data storage infrastructure comprising a plurality of data storage systems.

### Background

A data storage infrastructure provides large amounts of data storage for storing data items such as files, documents, and objects. To accommodate all this data, the data storage infrastructure comprises a plurality of data storage systems that are typically spread out over different geographic locations. A data storage system on its turn may comprise a plurality of data storage devices each providing some portion of data storage to the system. The data storage devices may be housed in different server racks within one or more data centres.

The data itself is composed of a large amount of data items that users of the infrastructure can access. A data item further contains the actual data together with metadata that provides further information about the associated data. A data item may further be uniquely identified within a data storage infrastructure by different physical and logical attributes that define the respective physical and logical location of the data items within the data storage infrastructure. A logical location is for example the name and the path within a file system or object storage system. A physical location is for example the geographic location of a data storage system, an identification of a data storage device, a storage tier, node or disk within a data storage device.

To manage a data storage infrastructure, there is a need to query different properties of the infrastructure based on the metadata and attributes. One way to do this is to translate a query to a one or more commands that are then executed on the data storage systems, e.g. by using file system commands supported by the operating system that runs on the different storage devices. However, executing such commands on a large data storage infrastructure often takes too long and consumes too many resources.

A better solution is to first extract all the metadata of the data items and all the different attributes. As this extracted information does not contain the data itself, it is a fraction of the data size, and it can be retrieved in a much faster and less resource-intensive manner. Moreover, all subsequent querying can be performed without interfering with the data storage system itself. Extracting of this information is also referred to as scanning or system scanning.

However, for a petabyte-scale data storage infrastructure the extracted information alone can still have a size in the order of terabytes. Therefore, performing brute force queries on all this data can still be too resource intensive to perform on a single computing device.

### Summary

The scope of protection sought for various embodiments of the invention is set out by the independent claims.

The embodiments and features described in this specification that do not fall within the scope of the independent claims, if any, are to be interpreted as examples useful for understanding various embodiments of the invention.

Amongst others, it is an object of embodiments of the invention to provide an improved solution for performing queries on properties of a data storage infrastructure.

This object is achieved, according to a first example aspect of the present disclosure, by a computer-implemented method for performing queries on properties of data items stored in a data storage infrastructure comprising a plurality of data storage systems; wherein the data items have associated metadata and are further identifiable within the data storage infrastructure by attributes characterizing a logical and physical location of the data items within the data storage infrastructure; the method comprising:
- performing system scans on the data storage systems to obtain the associated metadata and attributes;
- based on the system scans, mapping the data storage infrastructure to a rooted tree; wherein the data items are represented as leaf nodes thereby defining respective hierarchical paths along one or more internal nodes to the root node of the rooted tree; and wherein the internal nodes are defined according to a predefined hierarchical ruleset constructed from the attributes and/or associated metadata;
- ordering the nodes of the rooted tree according to a depth-first ordering rule in an ordered list;
- in the ordered list, adding references to respective next sibling nodes of the respective nodes;
- determining and adding, aggregated metadata to internal nodes based on metadata or aggregated metadata of descendant nodes;
- providing user definable hierarchical querying based on the aggregated metadata;
- when receiving a hierarchical query, perform the query by traversing through the nodes in the ordered list, and thereby:
   ∘ evaluating aggregated metadata of an internal node according to the query; and
   ∘ based on the evaluating, proceed to evaluating the next node in the ordered list or proceed to the sibling node.

A system scan is a command or group of commands, e.g. a scrip or program, that provides a listing of data items and their metadata, together with other attributes allowing to identify the data item within the storage system, i.e. to determine its logical and physical location. By the mapping to the rooted tree, all the data items are organized hierarchically within the data storage infrastructure and, thus, have a unique path to the root node. The root node itself identifies the data storage infrastructure. How the mapping is done, is defined by the predefined hierarchical ruleset according to the logical and physical location of the respective data items. Preferably, the ruleset first follows the physical location hierarchy of the infrastructure and then the logical hierarchy.

By the ordering, an ordered representation of the nodes is achieved, thereby obtaining a sequence that can be traversed one after to other to perform query processing on each of the nodes. The ordered list may be embodied as a text file wherein each line of the file defines a node. A line may further be divided in columns, e.g. by a delimiter, each containing properties of the node such as the metadata, aggregated metadata, the reference to the next sibling node, a reference to the parent node, a path from the root node to the node, a sequence number for referencing the node, and the attributes applicable for that node. Due to the hierarchical nature of the rooted tree, metadata aggregation is supported. The combination of the metadata aggregation and node ordering supports a very efficient execution of hierarchical queries when the queries or query results have an affinity with the hierarchical ruleset. Typically, queries on properties of data items stored in a data storage infrastructure have such an affinity because data items are typically organised hierarchically by a user according to inherent properties. In such case, the queries may only require information about data items that reside in certain subtrees of the rooted tree. Based on the aggregated metadata assigned to an intermediate node, it can be decided to evaluate the descendant nodes of that internal node by proceeding to the next child node in the list, or to skip these descendant nodes by proceeding to the next sibling node by directly following the added reference. Both skipping a subtree and entering a subtree is done by proceeding forward in the ordered list, i.e. either by selecting the next node or by proceeding with the next sibling node. Traversing through an ordered list, e.g. a file, is a very efficient operation. Even for a large data storage infrastructure, e.g. in the order of petabytes, and a large number of data items, i.e. in the order of billions, the ordered list, when represented as a text file, will be around a few terabytes. Such a file and thus the queries can still be performed by a single server. Furthermore, the needed resources for performing queries scale linearly with the number of stored data items.

In the present disclosure, the term 'metadata' is mostly used in the context of information about a data item stored in the data storage infrastructure and may end up in a leaf node of the ordered list. Aggregated metadata is the aggregation of such metadata, e.g. ending up in the intermediate nodes in the ordered list. The term 'attribute' is mostly used in the context of information describing the physical and logical location of a data item. The term property is used to refer to any type of information including metadata, aggregated metadata, attributes, or other properties in the context of querying.

According to example embodiments, the aggregated metadata is in the form of at least one of:
- an interval defining a range of metadata values of the descendant nodes;
- a weighted value of metadata values of the descendant nodes such as a maximum, a minimum, a total, and a mean value;
- a list of metadata values assigned to the descendant nodes;
- a statistical measure of the metadata values of the descendant nodes; and
- a probabilistic measure indicative of the probability that a metadata value is present in the descendant nodes.

A statistical measure may for example be a percentile or histogram. An example of a probabilistic measure is a Bloom filter by which it can be determined whether a certain metadata value is either possibly present in the subtree or definitely not present in the subtree.

According to example embodiments, the predefined hierarchical ruleset introduces the intermediate nodes from the root node to the respective data items first according to one or more first intermediate nodes defining a physical location of a respective data item, and then according to one or more second intermediate nodes defining a logical location of the respective data items within the physical location.

According to example embodiments the predefined hierarchical ruleset introduces intermediate nodes according to:
- a geographical location where the underlying data items reside;
- an identification of the storage system where the underlying data items reside;
- a storage device onto which the underlying data items are stored;
- a folder in which the underlying data items reside; and/or
- an identification of the object storage system within which the underlying data items reside.

According to example embodiments, the hierarchical query comprises a node filtering query to select a subset of the rooted tree according to a node filtering condition on metadata.

According to example embodiments, the performing of the query comprises removing or skipping the intermediate node and descendant nodes or retaining the intermediate node and descendant nodes by evaluating the node filtering condition against the aggregated metadata of the intermediate node.

According to example embodiments, the hierarchical query comprises a property aggregation query to determine an aggregated property of the selected subset of the rooted tree.

According to example embodiments, the associated metadata comprises at least one of:
- a size of the data item;
- a timestamp;
- user permissions;
- owner identification;
- a filetype;
- a file path,
- a file name; and
- a file extension.

According to example embodiments, the method further comprises:
- providing a user interface for adding user-defined aggregated metadata to intermediate nodes of the rooted tree; and
- providing the user definable hierarchical querying further based on the user-defined aggregated metadata.

According to a second example aspect, a data processing system is disclosed comprising means for carrying out the method according to the first example aspect.

According to a third example aspect, a computer program is disclosed comprising instructions which, when the program is executed by a computer, cause the computer to carry out the method according to the first example aspect.

According to a fourth example aspect, a computer-readable storage medium is disclosed comprising instructions which, when executed by a computer, cause the computer to carry out the method according to the first example aspect.

### Brief Description of the Drawings

Some example embodiments will now be described with reference to the accompanying drawings.
Fig. 1 shows a graphical representation of a data storage infrastructure according to an example embodiment;
Fig. 2 shows a rooted tree representing a data storage infrastructure according to an example embodiment;
Fig. 3 shows metadata and attributes assigned to nodes of a rooted tree representing a data storage infrastructure according to an example embodiment;
Fig. 4 shows an ordered list with nodes of a rooted tree representing a data storage infrastructure according to an example embodiment;
Fig. 5 shows steps of a method for determining an ordered list with nodes of a rooted tree representing a data storage infrastructure according to an example embodiment;
Fig. 6 shows steps of a method for evaluating a query for properties of a data storage infrastructure according to an example embodiment;
Fig. 7 shows how a rooted tree representing a dataset is subdivided into different rooted trees representing different subsets of the dataset according to different filtering queries according to an example embodiment;
Fig. 8 shows different subqueries performed on an ordered list with nodes of a rooted tree representing a data storage infrastructure according to an example embodiment; and
Fig. 9 shows an example embodiment of a suitable computing system for performing one or several steps according to embodiments of the invention.

### Detailed Description of Embodiment(s)

The present disclosure relates to the querying of properties of data items in a data storage infrastructure. A data storage infrastructure facilitates the storage of large amounts of digital data, typically in the order of petabytes or more. A data storage infrastructure contains a plurality of data storage systems, typically located across different geographical locations. A data storage system may on its turn contain different data storage devices that store the actual data on a physical medium, e.g. a hard drive.

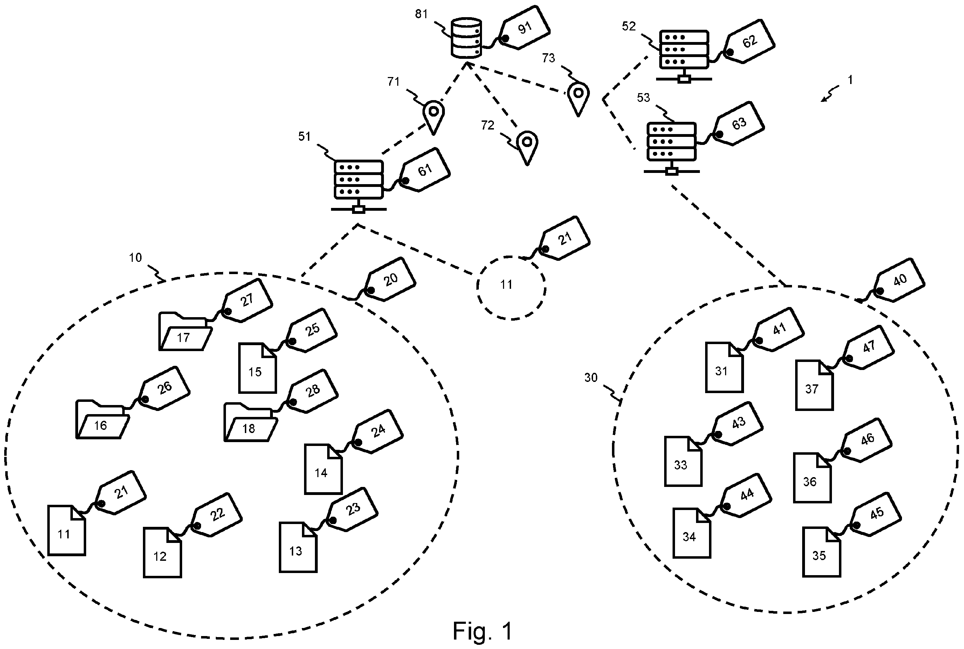

Fig. 1 shows an example data storage infrastructure 1 containing various data storage systems 81, 51, 52, 53. The storage systems may be located in different geographical locations 71, 72, 73. The main purpose of a data storage infrastructure 1 is to store data items 11-15, 31-37 and to make these accessible to users of the data storage infrastructure 1. Data items may be organized in a logical data structure such as a filesystem or object storage bucket 10, 30 that provide a coherent logic interface to access the data items. Data items 11-15, 31-37 also have metadata 21-25, 41-47 associated with them. This metadata may be stored together with the respective associated data items or stored centrally for a complete filesystem, object storage bucket, or storage device. Metadata may contain various types of information about the data item, such as for example: i) the size of the data item, ii) timestamps indicating events related to the data item such as its time of creation, when it was last modified, when it was last accessed, and when it was last read, iii) information about ownership of the data item, e.g. which user or group owns the data item, iv) information about permissions, e.g. what users or user groups can read, modify or delete the data item, v) file name extension, vi) version of the data item, and vii) the name of the data item.

Data items may be organized in a logical hierarchy within a logical data structure 20, 40, e.g. according to a filesystem structure wherein each data item is organized in folders 16, 17, 18 that define a unique path and thus logical location of each data item. In order to uniquely identify a data item within the data storage system, further attributes may be needed such as an identification of the storage system or storage device within the system, e.g. a network address, onto which the data item is located, an identification of the logical data structure containing the data item, and a geographical location of the storage system. Each data item is then uniquely identifiable by a set of such logical and physical attributes. Each data item may be identifiable by different sets of attributes. For example, data items in filesystem 10 may be identified by i) a path within the filesystem 10 and a network address of storage system 51, ii) or by a single logical path wherein the storage systems and devices are mapped as folders within a single file system.

Logical and physical attributes as well as metadata may be stored throughout the data storage infrastructure, e.g. some information 91 may be stored and managed centrally 81, some information 61, 62, 63 may be stored on the level of a data storage system, some information 20, 40 may be stored on the level of the logical data structure 10, 30, and other information 26-28 may be stored within a logical data structure as part of the file system such as for example folders 16-18.

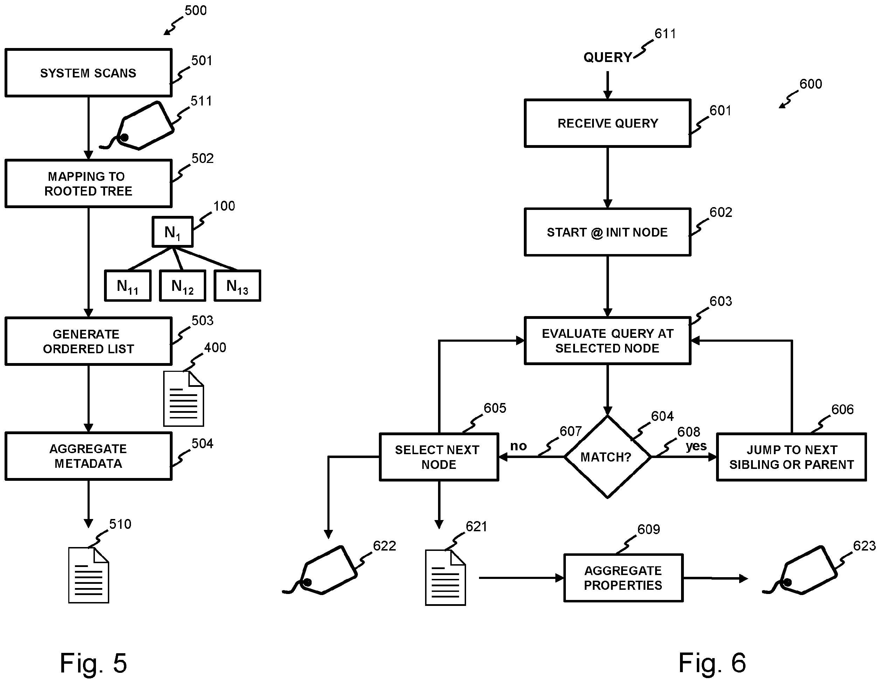

Fig. 5 illustrates computer-implemented steps 500 for parsing metadata and attributes of a data storage infrastructure into an order list 401, 402 according to an example embodiment.

In a first step 501, system scans are performed on the data storage systems of the data storage infrastructure. Such a system scan comprises one or more commands that retrieve the metadata and attributes from the data storage system, i.e. all information 511 about the stored data item apart from the data itself.

A system scan may be a set of commands, a script or computer program that, when executed, obtains all the properties, i.e. metadata and attributes, of data items within a storage system. A system scan may comprise various commands that are specific for the type of data storage system. Commands may for example be constructed using open or proprietary network storage protocols such as SMB, NFS, S3, Content-Addressable Storage, Azure Blob, Google Cloud Storage, Google Drive, Dropbox, Microsoft OneDrive, and Microsoft SharePoint. A first set of commands may query a management interface of the data storage system to find entry points of various data trees, e.g. storage subsystems, filesystems, object storage namespaces, and buckets. A second set of commands may make subsequent queries to list the next set of data items. Various methods are known to the skilled person to speed up this process by issuing parallel listings of data items, including listing entry points and folders in parallel, and bisecting an object storage key space. Different data storage systems may have different and proprietary ways to efficiently query the data item lists and metadata. These data storage systems may have different sets of data item properties, and not all properties may be retrievable at the same cost, e.g. financially, resource-wise, or both.

Then the method proceeds to step 502 wherein the data storage infrastructure 1 is mapped to a rooted tree 100.

In the present disclosure, the following terms are defined in the context of a rooted tree 100: a global dataset is the collection of all data items of the data storage infrastructure that is under consideration and thus represented in the rooted tree 100; a dataset is a collection of data items under consideration and a subset of the global dataset; a rooted tree is a collection of connected nodes wherein each node has one parent node except for the root node 101 that has no parent node; if a certain node has a parent node, then that node is a child node of that parent node; a node with no child nodes is a leaf node; a node that has both a parent node and at least one child node is an internal node; a path of a node is the sequence of parent nodes up to the root node; an ancestor node of a certain node is a node that appears in the path of that node; a descendant node of a certain node is an ancestor node of that node; sibling nodes are nodes with the same parent node; a subtree of a node is the rooted tree of all descendant nodes with that node as root node.

By the mapping step 502, the data items are represented as leaf nodes in the rooted tree thereby defining hierarchical paths along one or more internal nodes to the root node of the rooted tree. The internal nodes of the rooted tree are introduced according to a hierarchical ruleset, i.e. a set of rules that defines a location of the leaf nodes within the data storage infrastructure based on the metadata and location attributes obtained from the system scans.

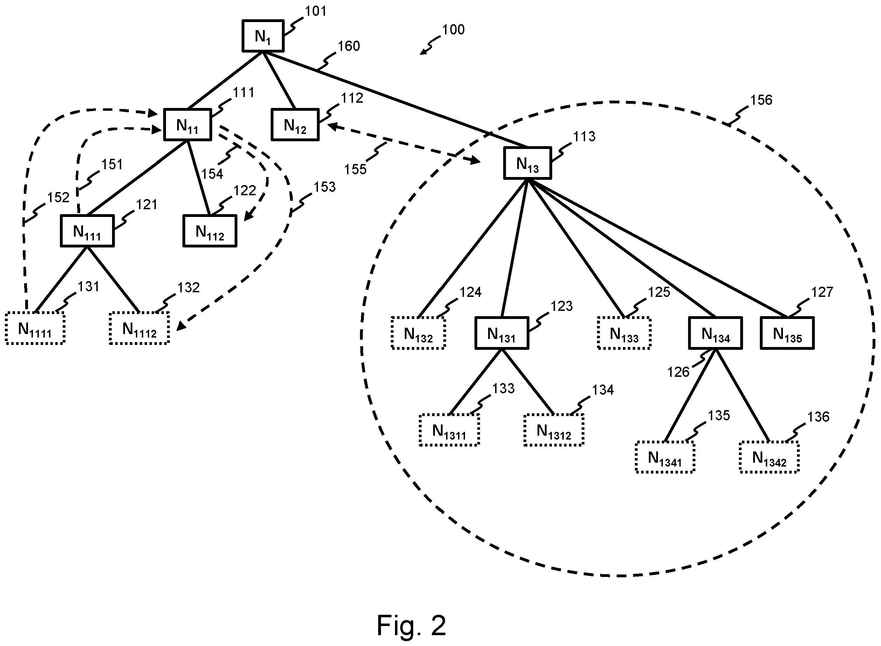

Fig. 2 shows a simplified example of such a rooted tree 100. The root node 101 defines the start point of all hierarchical paths to the leaf nodes. Leaf nodes 131-136 and 124-125 represent data items and, as such, are leaf nodes within the rooted tree 100. Leaf nodes 131-132 are defined within the rooted tree along intermediate nodes 121 and 131. Leaf nodes 124 and 125 are defined within the rooted tree along intermediate node 113. Leaf nodes 133 and 134 are defined within the rooted tree along intermediate nodes 123 and 113. Leaf nodes 135 and 136 are defined within the rooted tree along intermediate nodes 126 and 113.

The ruleset for the intermediate nodes is selected such that each data item is represented by a leaf node, and such that each node has only one parent node (except for the root node 101 itself). This assures that each data item is defined by one path from the root node 101. Each child node in the path thereby narrows the location of the containing data items. The following attributes may for example be used to define the intermediate nodes of a hierarchical path:
i. Root node: this one single root node defines the entire data infrastructure. This is a logical node representing the top of the tree.
ii. Geographical location: Data storage systems may store data in a certain geographical area, both for technical reasons such as data latency, and for regulatory reasons such as data residency. Although the storage system itself might consist of several devices which may even be stored in different data centres, the entire data system is often assigned to one geographical location e.g. USA, the European Union, or a specific country.
iii. Data centre: A storage system may be deployed in a single datacentre or over multiple data centres. The data centre or data centre group may be used as a node in the hierarchy.
iv. Data storage system: A storage system that comprises storage devices deployed over one or more data centres. A storage system is typically managed as one system, and provided and supported by one vendor. The storage system itself may grow or shrink over time, parts of it may be replaced, but it is still considered a single system.
v. Data storage service: Certain data storage systems provide data storage to a user as a data storage service. Examples are AWS S3 or Azure Blob Storage. A data storage service may further be subdivided in subservices according to a geographical region. Both services and subservices may be represented as intermediate nodes.
vi. Data storage sub-system: Some data storage systems may be represented as multiple logical sub-systems, often called tenants or sub-servers. These sub-systems may have their own performance, capacity, and security policies, and may have dedicated networks. They typically consume resources from their parent data storage system. Sometimes, a data storage sub-system is further partitioned in sub-sub-servers such as volumes.
vii. The logical data structure, e.g. filesystem and object bucket: a data storage (sub)service or (sub)system may comprise one or more flat or hierarchically organized sets of data items such as a filesystem or an object storage bucket.
viii. Folder, directory, or data container: This is a logical grouping of data, e.g. a folder on a filesystem, or all object storage keys starting with a certain object storage key prefix. During system scanning, a folder or directory may be listed as an empty data item, i.e., only containing metadata. In such case, the hierarchical ruleset will map such empty data item to a leaf node of the rooted tree.

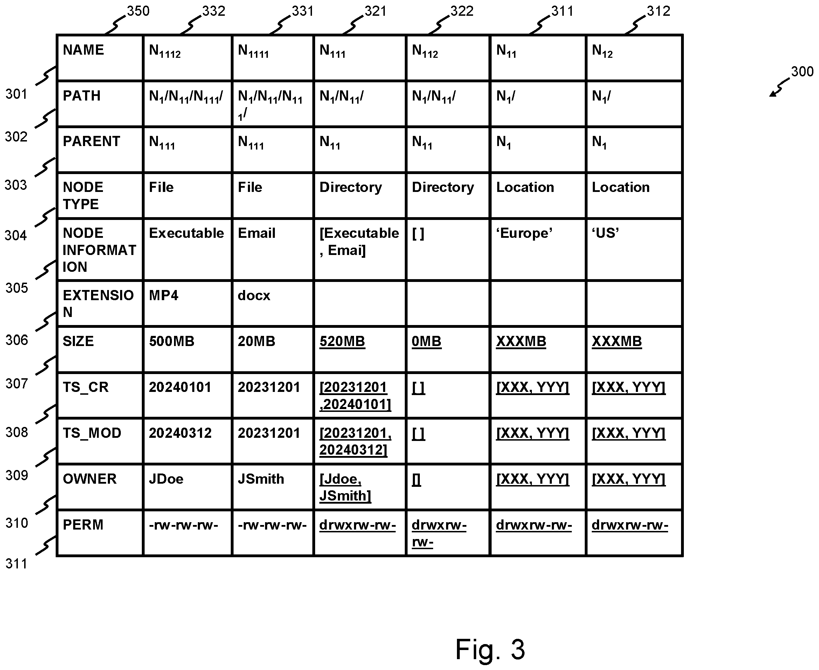

Fig. 3 shows a table representation 300 of some of the nodes of the tree 100 after the mapping step 502. In table 300, columns 332, 331, 321, 322, 311, and 312 represent respective nodes 132, 131, 121, 122, 111, and 112 of tree 100. Rows 301-311 show different properties 350 associated with each of the nodes. The properties that are underlined are so-called aggregated properties or metadata which are further described below. The properties that are not underlined result from the mapping step 502. These properties may be obtained from the associated metadata of the data items, from the location attributes within the data storage system, or from any other attribute within the data storage system. These properties are assigned or allocated during mapping step 502 according to the hierarchical ruleset. According to example embodiments any of the following properties may be assigned:
- Name 301: the name of the node. For a data item, this may be the name of the actual data item, for folders this may be the name of the folder, for other intermediate nodes this may be any form of descriptive term or identification code that identifies the node.
- Path 302: the path that leads from the root node to the selected node. This path may be determined by following the parent node property 303 up to the root node.
- Node type 303: a field describing the type of node. Data items may for example be described as files. Intermediate nodes may have as type any of the above identified types, e.g. location, folder, tenant, server etc.
- Node information 305: a further description of the node type. This may be a value or a string. This may be different dependent on the node type. The information may be selected from a set of possible values, may be unrestricted, or may be left empty. For example, nodes 311, 312 are locations whereby the information 305 specifies the actual location, nodes 332, 331 are files whereby the information 305 the type file, e.g. an executable, an email etc.

- Extension 306: the file extension of a file. This may be left empty for other types of nodes.
- Size 307: the size of the actual data of a data item.
- Timestamps 307 and 308: a timestamp that indicated when a data item was created (row 308) and when a data item was last modified. Such timestamp information may also be available for folders and applied according to the ruleset.
- Owner 310: information about the ownership of the data item, e.g. a username or user group. Such information may also be available for folders and applied according to the ruleset.
- Permission 311: information about permissions to handle a data item, e.g. read permission, write permission, and execute permission.

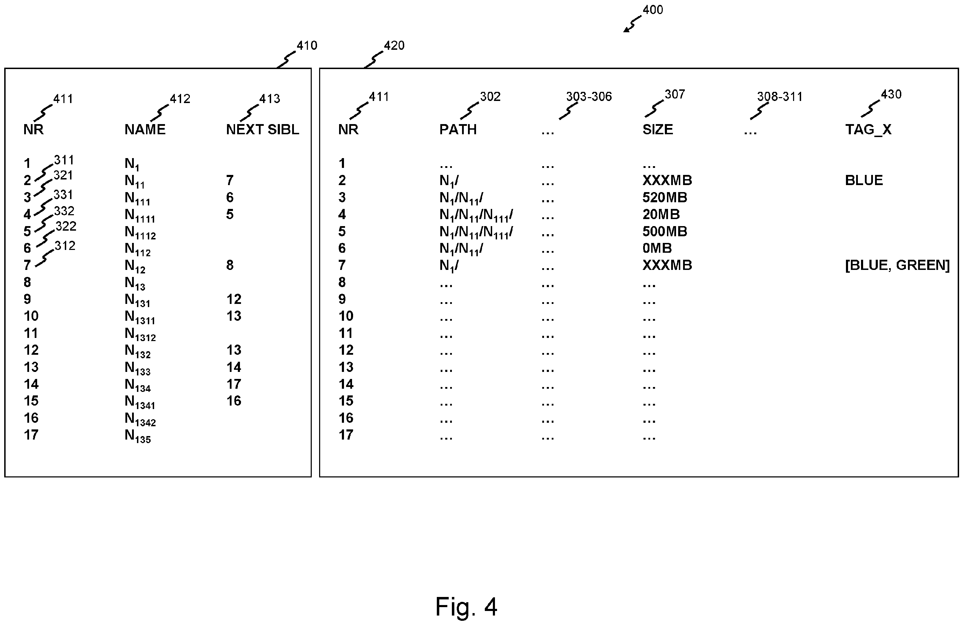

When the mapping is performed, the method 500 proceeds to step 503 that essentially orders the nodes in of the tree 100 according to a depth-first ordering rule. The ordering starts with listing the root node, then lists the first child node of the root node, e.g. node 111, and keeps proceeding to the child nodes, e.g. node 121, until it arrives at a leaf node, e.g. node 131. Then, if any, the sibling nodes of the leaf node are listed, e.g. node 132. When there are no further sibling nodes, the same procedure is followed for the sibling nodes, e.g. node 122, of the parent node, e.g. node 121. According to this depth-first procedure, the information as shown in table 300 is re-ordered and an ordered list 400 is obtained. An example of the obtained ordered list 400 is shown in Fig. 4. According to example embodiments, the ordered list can be constructed as a single file wherein each line lists all the properties of a node. Alternatively, the ordered list can be divided over different files wherein a part of the properties is listed in a first file 410 and a second part of the properties is listed in a second file 420. This has the advantage that the structure of the rooted tree is in one file 410 while the associated properties of the nodes are in a second file.

The ordered list 400 identifies each node by a sequence number 411, e.g. an increasing natural number for each following node according to the depth-first ordering. For each node, also a reference 413 is added to the node's next sibling node, if any. This may be done by specifying the sequence number of sibling node or leaving a blank when there are no more sibling nodes. The ordered list 400 further identifies the nodes' properties, e.g. properties 301-311. These properties may be added to the second file 420 wherein the sequence number refers to the same node as in the first file 410. The sequence numbers may also be implicitly defined within the ordered list 400, e.g. by the line number in the file 410 or 420 where the node is listed.

The method 500 then proceeds to step 504 during which metadata aggregation is performed on the order list 400. Metadata aggregation refers to the aggregation of properties to different intermediate nodes of the rooted tree based on the aggregated properties of the descendant nodes, i.e. the descendant subtree. As a result, the property of a certain intermediate node is indicative of the properties of all descendant nodes.

Different examples of metadata aggregation are depicted in Fig. 3 wherein the aggregated properties are underlined. Leaf nodes 311 and 322 have a size property 307 indicative of the size of the data item they represent. During the aggregation step 504, the parent intermediate node 321 is then assigned with the total size of all descendant nodes, i.e. the size of leaf nodes 331 and 322, which amounts to 520MB (Megabytes). Similarly, as the node 322 represents an empty folder, its size 307 is zero MB. A similar aggregation of the size property is performed for all the other nodes up to the root node.

Leaf nodes 311 and 322 also have a creation time property 308 indicative of the time when the data item was created. During aggregation step 504, the parent intermediate node 321 is then assigned with the smallest time interval containing the creation times of all descendant nodes, i.e. the creation time of leaf nodes 331 and 322. Node 322 represents an empty folder and may be assigned with an empty time interval. Alternatively, node 322 may also have been assigned with the creation time of the folder itself during the mapping step 502. A similar aggregation of the creation time property is performed for all the other nodes up to the root node. Leaf nodes 311 and 322 also have a modification time property 308 indicative of the time when the data item was modified. A similar metadata aggregation as for the creation time property may be performed.

Leaf nodes 311 and 322 also have an owner property 310 indicative of who owns the data item, e.g. in the form of a username. During aggregation step 504, the parent intermediate node 321 is then assigned with a list of owners of the descendant leaf nodes. i.e. a list with the owner `JDoe' of leaf node 322 and 'JSmith' of leaf node 311. Node 322 represents an empty folder and may be assigned with an empty time interval. Alternatively, node 322 may also have been assigned with the owner's name of the folder itself. A similar aggregation of the creation time property is performed for all the other nodes up to the root node.

According to example embodiments, the aggregated metadata may be in the form of an interval defining a range of the metadata values of the descendant nodes. For example, a time range when the metadata of the data items is a timestamp, or a size range when the metadata of the data items is a size. According to example embodiments, the aggregated metadata may be in the form of a weighted value of metadata values of the descendant nodes. Examples of weighted values are a maximum, a minimum, a total, a mean, and an average value. For example, an aggregated metadata value may represent the total size of all descendant data items, or the latest time that one of the descendant data items was modified. According to example embodiments, the aggregated metadata may be in the form of a list of metadata values assigned to the descendant data items. According to example embodiments, the aggregated metadata may be in the form of a statistical measure of the metadata values of the descendant nodes. Examples of statistical measures are percentiles indicative for a certain probability that a data item will have a metadata value above or below the percentile value. Common examples of percentiles are P10, P50, and P90. Another example of a statistical measure is a histogram which may be represented as a series of numbers. According to example embodiments, the aggregated metadata may be in the form of a probabilistic measure indicative of the probability that certain metadata is present in the descendant nodes An example of a probabilistic measure is a Bloom filter by which it can be determined whether a certain metadata is either `possibly' present in the subtree or 'definitely not' present in the subtree.

The result of the aggregation step 504 is an updated ordered list 510 of the original ordered list 400 that now also contains the aggregated metadata. By the hierarchical mapping, the depth-first ordering, and the metadata aggregation, the resulting list 510 allows for efficient querying for properties of the data storage infrastructure when the queries have an affinity with the underlying hierarchy as defined by the hierarchical ruleset. Due to the underlying nature of data storage, most queries on properties of a data storage infrastructure have such an affinity and will thus benefit from the structure of the disclosed ordered list 510.

Fig. 6 shows steps of a method 600 for performing such a query according to example embodiments. According to a first step 601, a query 611 is received to evaluate one or more of the properties of the data items in the data storage infrastructure. Query 611 may be user-defined, for example through a command-line or graphical user interface. The query 611 may be performed on the global dataset as represented in the ordered list 510. The query 611 may also be performed on a subtree within the global dataset, e.g. by limiting the query to a range of lines within the ordered list 510 that defines such a subtree. The query 611 may also be performed on a dataset that is derived from the global dataset and which is also represented in such an ordered list as a rooted tree. Such a derived dataset may be the result of a filtering query as will be discussed below. The method then proceeds to step 602 where the initial node is selected which is typically the root node, i.e. the first line in the ordered list.

Then the method 600 proceeds to the next step 603 where the query is evaluated on the currently selected node, in this case the initial node as selected in step 602. The query 611 is evaluated against the properties of the currently selected nodes. When the current node has aggregated metadata, it may be possible to evaluate the query based on the aggregated metadata or not. When possible, it is not needed to evaluate the query on the descendant nodes, so the descendant subtree can be skipped. In this case, the method proceeds to step 606 wherein the sibling node of the current node is selected as the next node. This is done by proceeding to the line of the ordered list 510 that is indicated as the sibling 413. If there is no sibling, then all the nodes at the current depth of the tree have been processed and the method can proceed to the next subtree by selecting the next node, and thus next line, in the ordered list 510. When it is not possible to evaluate the query based on the aggregated metadata, then the method has to evaluate the descendant nodes of the current node. In this case, the method proceeds to step 605 in which the first child node is selected. As the order list 510 is organised in a depth-first manner, this is done by selecting the next node in the ordered list. If the current node is the last node, then the method 600 ends. After selecting the next node by either of step 605 and 606, the method proceeds to step 603 and evaluates the query against this next node.

According to example embodiments, the query 611 comprises a node filtering query to select a subset 621 of the rooted tree according to a node filtering condition on the node properties. The result of a node filtering query is a subset of the nodes represented in the ordered list 510 that match a certain condition as specified in the query 611. As this condition filters nodes from the list 510 it is further referred to as a filtering condition. When it is possible to evaluate a filtering query on a certain intermediate node in step 603, the result of the filtering condition is to either retain or discard the subtree as defined by this intermediate node. Discarding the subtree may be performed efficiently by removing the lines of the subtree from the ordered list 510. Retaining the subtree may be performed efficiently by selecting the sibling or parent node under step 606. Advantageously, the filtering query is performed on a duplicate of the ordered list 510. When reaching the end or the ordered list, the resulting filtered ordered list 621 will only contain the nodes that fulfil the filtering condition of the query 611. The aggregated metadata in the filtered ordered list may further be updated to represent the aggregated properties of the leaf nodes in the filtered node tree as represented by the filtered ordered list 621. Also, the numbering 411, 413 of both the nodes and sibling nodes may have to be updated when discarding nodes from the ordered list. Both the updating of the numbering and aggregated properties may be performed during the evaluating step 603 or afterwards.

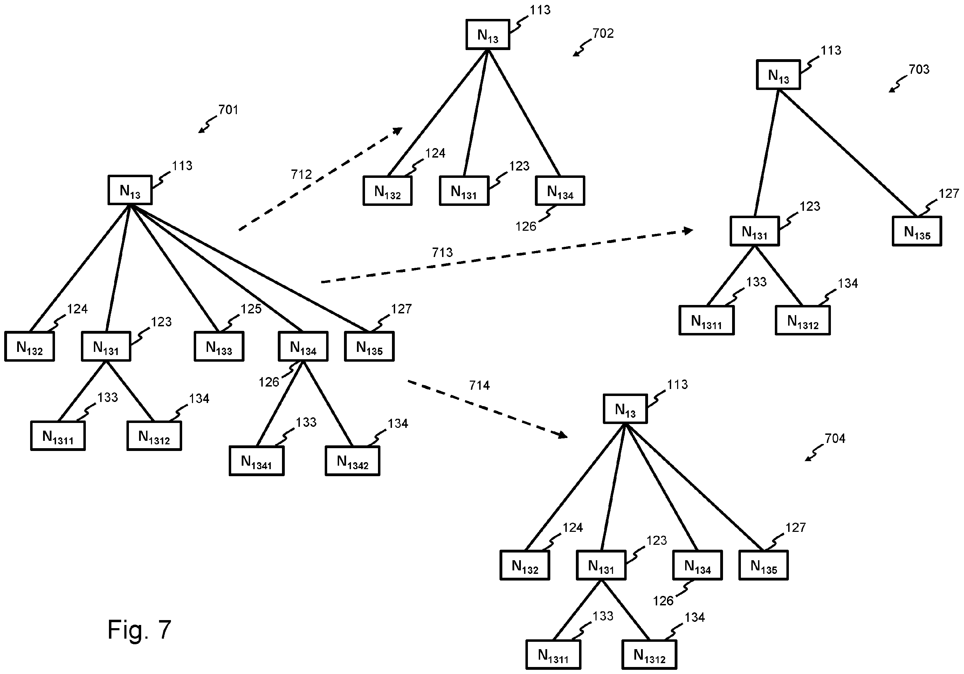

Fig. 7 illustrates rooted trees 702, 703, 704 resulting from performing respective filtering queries 712, 713, 714 on a rooted tree 701 according to the method 600. As input of the method 600, an order list is used that contains the subtree of intermediate node 113 from the tree 100 of Fig. 1.

According to example embodiments, the query 611 comprises a property aggregation query to determine an aggregated property 622, 623 of the filtered subset 621 of the rooted tree. In some cases, a user is more interested in the properties of a filtered subset of data items rather than an exhaustive list of the data items themselves. As such, a query may further relate to an aggregation of one of more properties of the filtered subset. Such aggregation of the properties may be done during the method 600. In such case no filtered order list needs to be generated first, but the aggregated properties 622 are directly determined during the performance of the method. Alternatively, the aggregated properties can be determined in a separate step 609 based on the filtered ordered list 621.

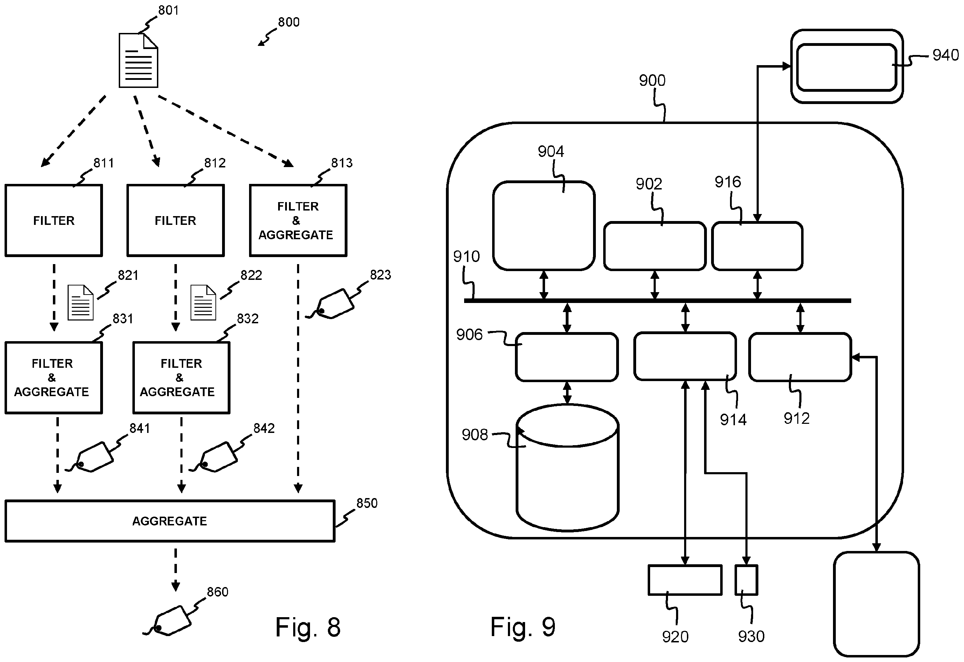

According to example embodiments, a query may comprise different subqueries which are evaluated according to method 600. Subqueries may be performed independently from one another. Subqueries may also be dependent on other subqueries, i.e. the result of one subquery is used as input for the other subquery. Fig. 8 shown a graphical example 800 of how a query is decomposed in subqueries and evaluated. The query is performed on an ordered list 801 representing a data storage infrastructure as a rooted tree. Alternatively, the query may be performed on a subset of nodes of the rooted tree. Such a subset may be obtained from a previously performed query. Two different filtering subqueries 811 and 812 are performed on the rooted tree 801 resulting in two different subsets 821, 822 of the rooted tree 801, both represented by ordered lists. In parallel, a filtering and aggregating subquery 813 is performed on the rooted tree 801, resulting in aggregated properties 823. Further, two additional filtering and aggregating subqueries 831 and 832 are performed on the respective subsets 821 and 822 resulting in respective aggregated properties 841 and 842. Finally, Aggregated properties 841, 842, and 823 are aggregated together to obtain the aggregated properties 860 as overall result of the query. Each of the subqueries 811-813, and 831-832 may be performed according to the steps of method 600. Subqueries that are independent of one another may be performed in parallel.

When parallel filtering subqueries such as subqueries 811, 812 result in nonoverlapping datasets, then these subqueries may be referred to as partitioning. When the subqueries result in overlapping datasets, then the subqueries may be referred to as categorization.

According to further example embodiments, a user interface may be provided allowing a user to add user-defined aggregated metadata to intermediate nodes of the rooted tree. As this type of metadata is added by a user, it is further referred to as tags and the addition as tagging. Tags may be defined in groups of individual tags. A user may be allowed to add only one tag of a tag group to an intermediate node, further also referred to as single tag assignment. Alternatively, a user may be allowed to add more than one tag of a tag group to an intermediate node, further also referred to as multi tag assignment. When an intermediate node is tagged, then, by definition, the tag is considered assigned to all the descendant nodes. In other words, all descendant nodes inherit the tag of an ancestor intermediate node. When a user adds a tag, then the tag is added to the entry of the node in the ordered list 400. For example, a user defines a tag group 430 with possible values {RED, GREEN, BLUE}. This tag group is then added to the ordered list by inserting a new column 430. Then, the user tags both nodes 311 and 312 with `BLUE' and node 312 with 'GREEN' upon which the tags are added to column 430 of the ordered list 400. Likewise, tags can be removed by removing them from the ordered list. When tags are added by a user to a certain node, then the presence of the tag is aggregated to its ancestor nodes, e.g. by adding it to a list of metadata values representing the tags, a tag list, similar to the metadata aggregation as described in step 504.

According to example embodiments, a hierarchical query may also be based on tags, i.e. on user-defined aggregated metadata. Evaluating the query may then be done according to the method 600 as described above. In step 603, when evaluating the query, as soon as an intermediate node contains the tag from the query, all data items of the subtree are considered to have the tag. Further, when the query relates to a single assignment tag from a tag group, then, when encountering another tag of that group, all data items of the subtree can be skipped as well. Likewise when a tag is not listed in the aggregated tag list, then the subtree can also be skipped. As such, there is no need to descend into the subtree and the method directly proceeds to the next sibling node according to step 606.

According to example embodiments, a data item represented by a leaf node can be checked as being tagged by verifying the leaf node and its ancestors. Upon encountering an ancestor with the tag, then the leaf node is identified as also being tagged. When arriving at the root node, then the leaf node is identified as not being tagged.

An example of the principles disclosed in the above embodiments will now be described. An example large data infrastructure consists of various data services such as AWS S3 or Azure Files that are deployed in the cloud, and of various file and object storage systems deployed in enterprise datacentres. The data services and data systems are deployed in a large variety of geographic locations. According to method 500, all these data services and data systems are scanned and mapped onto a rooted tree and represented in an ordered list 510. Further, internal nodes representing the cloud services are tagged as 'PUBLIC_CLOUD'. Subtrees are further tagged according to departmental ownership of these subtrees, e.g by tags 'MARKETING' or `ENGINEERING'. Subtrees are further tagged according to the suitability of the data item for use in artificial intelligence, e.g. by the tags 'SUITABLE_FOR_AI_TRAINING' or 'NOT_SUITABLE_FOR_AI_TRAINING'. Different queries can be constructed by user, for example the filtering query 'which data is owned by MARKETING, stored in the PUBLIC CLOUD, and is SUITABLE FOR AI TRAINING?'. The result of this query may be further refined by 'what file extensions are in this dataset?' and, thereupon, to 'select all the text documents from this dataset'. Finally, a user may further query 'the data that was created at most 3 years ago' in order to limit the result to the most recent data. The final subset then lists all the recent text data items from the right department, suitable for AI training, and currently located on public cloud.

Fig. 9 shows a suitable computing system 900 for performing steps according to the above described embodiments. Computing system 900 may in general be formed as a suitable general-purpose computer and comprise a bus 910, a processor 902, a local memory 904, one or more optional input interfaces 914, one or more optional output interfaces 916, a communication interface 912, a storage element interface 906, and one or more storage elements 908. Bus 910 may comprise one or more conductors that permit communication among the components of the computing system 900. Processor 902 may include any type of conventional processor or microprocessor that interprets and executes programming instructions. Local memory 904 may include a random-access memory (RAM) or another type of dynamic storage device that stores information and instructions for execution by processor 902 and/or a read only memory (ROM) or another type of static storage device that stores static information and instructions for use by processor 902. Input interface 914 may comprise one or more conventional mechanisms that permit an operator or user to input information to the computing device 900, such as a keyboard 920, a mouse 930, a pen, voice recognition and/or biometric mechanisms, a camera, etc. Output interface 916 may comprise one or more conventional mechanisms that output information to the operator or user, such as a display 940, etc. Communication interface 912 may comprise any transceiver-like mechanism such as for example one or more Ethernet interfaces that enables computing system 900 to communicate with other devices and/or systems, for example with storage systems within a data storage infrastructure 1. The communication interface 912 of computing system 900 may be connected to such another computing system by means of a local area network (LAN) or a wide area network (WAN) such as for example the internet. Storage element interface 906 may comprise a storage interface such as for example a Serial Advanced Technology Attachment (SATA) interface or a Small Computer System Interface (SCSI) for connecting bus 910 to one or more storage elements 908, such as one or more local disks, for example SATA disk drives, and control the reading and writing of data to and/or from these storage elements 908. Although the storage element(s) 908 above is/are described as a local disk, in general any other suitable computer-readable media such as a removable magnetic disk, optical storage media such as a CD or DVD, -ROM disk, solid state drives, flash memory cards, ... could be used. Computing system 900 could perform steps according to the methods 500 and 600 as depicted in Fig. 5 and Fig. 6.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for performing queries on properties of data items stored in a data storage infrastructure (1) comprising a plurality of data storage systems (81, 62, 63); wherein the data items (11-15, 31-37) have associated metadata (21-25, 41-47) and are identifiable within the data storage infrastructure by attributes (16-18, 26-28, 91, 61-63, 71-73, 51-53, 20, 21, 40) characterizing a logical and physical location of the data items within the data storage infrastructure; the method comprising:
- performing (501) system scans on the data storage systems to obtain the associated metadata and attributes (511);
- based on the system scans, mapping (502) the data storage infrastructure to a rooted tree (100); wherein the data items are represented as leaf nodes (131-136, 122, 124, 125, 127) thereby defining respective hierarchical paths (302) along one or more internal nodes (111, 113, 121, 123, 126) to the root node (101) of the rooted tree; and wherein the internal nodes are defined according to a predefined hierarchical ruleset constructed from the attributes and/or associated metadata;
- ordering (503) the nodes of the rooted tree according to a depth-first ordering rule in an ordered list (401);
- in the ordered list, adding references (413) to respective next sibling nodes of the respective nodes;
- determining and adding (504), aggregated metadata to internal nodes based on metadata or aggregated metadata of descendant nodes;
- providing user definable hierarchical querying based on the aggregated metadata;
- when receiving (601) a hierarchical query (611), perform the query (603) by traversing through the nodes in the ordered list, and thereby:
∘ evaluating (606) aggregated metadata of an internal node according to the query; and
∘ based on the evaluating, proceed (605) to evaluating the next node in the ordered list or proceed (606) to the next sibling node.

2. The computer-implemented method according to claim 1 wherein aggregated metadata is in the form of at least one of:
- an interval defining a range of metadata values of the descendant nodes;
- a weighted value of metadata values of the descendant nodes such as a maximum, a minimum, a total, and a mean value;
- a list of metadata values assigned to the descendant nodes;
- a statistical measure of the metadata values of the descendant nodes; and
- a probabilistic measure indicative of the probability that a metadata value is present in the descendant nodes.

3. The computer-implemented method according to claim 1 or 2 wherein the predefined hierarchical ruleset introduces the intermediate nodes from the root node to the respective data items first according to one or more first intermediate nodes defining a physical location of a respective data item, and then according to one or more second intermediate nodes defining a logical location of the respective data items within the physical location.

4. The computer-implemented method according to any one of claims 1 to 3 wherein the predefined hierarchical ruleset introduces intermediate nodes according to:
- a geographical location where the underlying data items reside;
- an identification of the storage system where the underlying data items reside;
- a storage device onto which the underlying data items reside;
- a folder in which the underlying data items reside; and/or
- an identification of an object storage system within which the underlying data items reside.

5. The computer-implemented method according to any one of the preceding claims wherein the hierarchical query comprises a node filtering query to select a subset of the rooted tree according to a node filtering condition on metadata.

6. The computer-implemented method according to claim 5 wherein the performing the query comprises removing or skipping the intermediate node and descendant nodes or retaining the intermediate node and descendant nodes by evaluating the node filtering condition against the aggregated metadata of the intermediate node.

7. The computer-implemented method according to claim 5 or 6 wherein the hierarchical query comprises a property aggregation query to determine an aggregated property of the selected subset of the rooted tree.

8. The computer-implemented method according to any one of the preceding claims wherein the associated metadata comprises at least one of:
- a size of the data item;
- a timestamp;
- user permissions;
- owner identification;
- a filetype;
- a file path,
- a file name; and
- a file extension.

9. The computer-implemented method according to any one of the preceding claims further comprising:
- providing a user interface for adding user-defined aggregated metadata to intermediate nodes of the rooted tree; and
- providing the user definable hierarchical querying further based on the user-defined aggregated metadata.

10. A data processing system comprising means for carrying out the method according to any one of claims 1 to 9.

11. A computer program comprising instructions which, when the program is executed by a computer, cause the computer to carry out the method according to any one of claims 1 to 9.

12. A computer-readable storage medium comprising instructions which, when executed by a computer, cause the computer to carry out the method according to any one of claims 1 to 9.
